# EUROPÄISCHE PATENTSCHRIFT

(11) **EP 2 189 723 B1**
(45) Veröffentlichungstag und Bekanntmachung des Hinweises auf die Patenterteilung: **11.07.2018**
(21) Anmeldenummer: 09176855.6
(22) Anmeldetag: 24.11.2009
(51) Int. Cl.: F23R 3/08, F23R 3/00, F01D 9/02, F01D 11/00

(54) **Brennkammeranordnung zum Betrieb einer Gasturbine**
Combustion chamber for gas turbine
Chambre de combustion de turbine à gaz

(30) Priorität: 25.11.2008 CH 18382008
(43) Veröffentlichungstag der Anmeldung: 26.05.2010
(73) Patentinhaber: Ansaldo Energia IP UK Limited, London W1G 9DQ (GB)
(72) Erfinder: Poyyapakkam, Madhavan Narasimhan, CH-5507, Mellingen (CH); Magni, Fulvio, CH-5415, Nussbaumen (CH); Ince, Nadir, Rugby, CV23, OSE (GB)
(74) Vertreter: Bernotti, Andrea

(56) Entgegenhaltungen:
- EP-A- 0 049 190
- WO-A-2007/000409
- DE-A1- 4 223 828
- DE-B4- 19 615 910
- US-A- 3 811 276
- US-A- 4 380 906
- US-A1- 2002 174 658
- US-A1- 2008 179 837

## Beschreibung

### Technisches Gebiet

Die Erfindung bezieht sich auf eine Brennkammeranordnung zum Betrieb einer Gasturbine mit einer den Brennkammerraum umfassenden Brennkammerwand, gemäss Oberbegriff des Anspruchs 1.

### Stand der Technik

Eine Brennkammeranordnung der vorstehenden Gattung, bei der die Brennkammerwand austrittsseitig in überlappender Weise in ein Heissgasgehäuse mündet, durch das die innerhalb der Brennkammer gebildeten Heissgase einer Gasturbinenstufe zugeführt werden, werden mechanische Spannungen zwischen der Brennkammerwand und dem Heissgasgehäuse, bedingt durch thermisch unterschiedliche Materialausdehnungskoeffizienten, dadurch vermieden, indem die Brennkammerwand mit einem radialen Spiel in das Heissgasgehäuse einmündet und mit dieser einen über einen bestimmten axialen Bereich sich erstreckenden Spalt einschliesst.

Derartige Brennkammeranordnungen werden beispielsweise in Verbindung mit so genannten Silobrennern eingesetzt, zu deren näherer Erläuterung repräsentativ auf die DE 42 23 828 A1 verwiesen wird. Ebenso finden sich derartige Brennkammeranordnungen bei Ringbrennkammern, die eine Vielzahl sternförmig um die Rotoranordnung einer Gasturbinenanlage angeordnete langgestreckte Einzelbrennkammern vorsehen, von denen jede einzelne Brennkammer von einem Brenner bzw. einer Brenneranordnung befeuert wird. Die stromabseitigen Enden der einzelnen Brennkammern münden jeweils in ein Heissgasgehäuse, das die Heissgase in eine koaxial längs zur Rotoranordnung vorgesehene erste Expansionsstufe der Gasturbinenanlage zuführt. Repräsentativ hierzu sei auf die DE 196 15 910 B4 verwiesen.

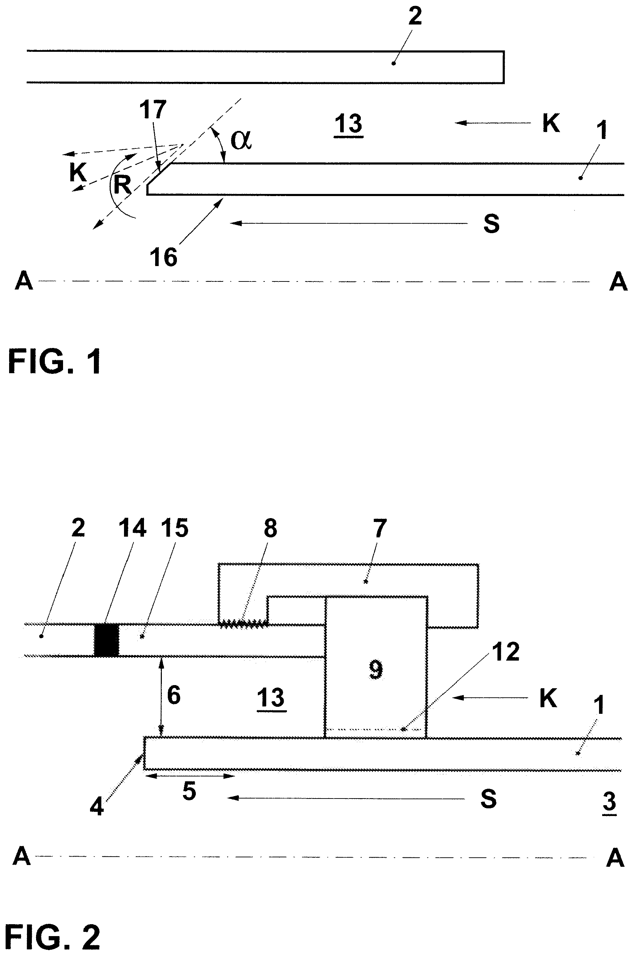

Aus der in Fig. 2 dieser Anmeldung schematisiert dargestellten Teillängsschnittdarstellung einer Brennkammeranordnung, im Wesentlichen gemäss DE 196 15 910 B4 (siehe hier insbesondere Fig. 1) aufgebaut, ist der Verbindungsbereich zwischen Brennkammerwand 1 und Heissgasgehäuse 2 näher illustriert. Es sei angenommen, dass die Brennkammerwand 1 sowie das sich stromab zur Brennkammerwand 1 anschließende Heissgasgehäuse 2 weitgehend zylinderförmig und rotationssymmetrisch um die Achse A ausgebildet sind. Weiter sei angenommen, dass stromauf zu der in Fig. 2 dargestellten Strömungsrichtung S eine Brenneranordnung zur Befeuerung der Brennkammer 3 vorgesehen ist, in der sich Heissgase ausbilden, die sich längs der Strömungsrichtung S ausbreiten und über die in Fig. 2 dargestellte Brennkammerwandkante 4 in das Heissgasgehäuse 2 strömen, das die Heissgase stromab in einer nicht weiter dargestellten Gasturbinenstufe zur gezielten Expansion leitet.

Zur Vermeidung von Stufenleckagen und von thermisch induzierten mechanischen Spannungen zwischen der Brennkammerwand 1 und dem sich stromab an diesen anschließenden Heissgasgehäuse 2 mündet die Brennkammerwand 1 mit ihrer frei endenden Brennkammerwandkante 4 mit einem axialen Überlapp 5 innerhalb des Heissgasgehäuses 2, wobei die Brennkammerwand 1 gegenüber dem Heissgasgehäuse 2 einen radialen Abstand 6 aufweist.

Zur Befestigung der ringförmigen Dichtung 9 sieht das Heissgasgehäuse 2 an seinem stromaufwärtigen Ende in Umfangsrichtung um das Heissgasgehäuse 2 verteilt angeordnete, einzelne kragenartige Befestigungsmittel 7 vor, die einseitig mit dem Heissgasgehäuse 2, vorzugsweise über eine Schweißverbindung 8 fest verbunden sind. Dabei ist hinzuweisen, dass die ringförmige Dichtung weitgehend durch einen Ring charakterisiert ist, welcher eine temperaturabhängige Dilatation resp. Restriktion möglich macht. Die einzelnen kragenförmigen Befestigungsmittel 7 stehen in Eingriff mit dieser ringförmigen Dichtung 9, die die Außenseite der Brennkammerwand 1 in Umfangsrichtung vollständig umgibt und an diese presskraftbeaufschlagt derart gefügt ist, dass die ringförmige Dichtung 9 einen gegenüber der Brennkammerwand 1 axial festen Sitz erfährt.

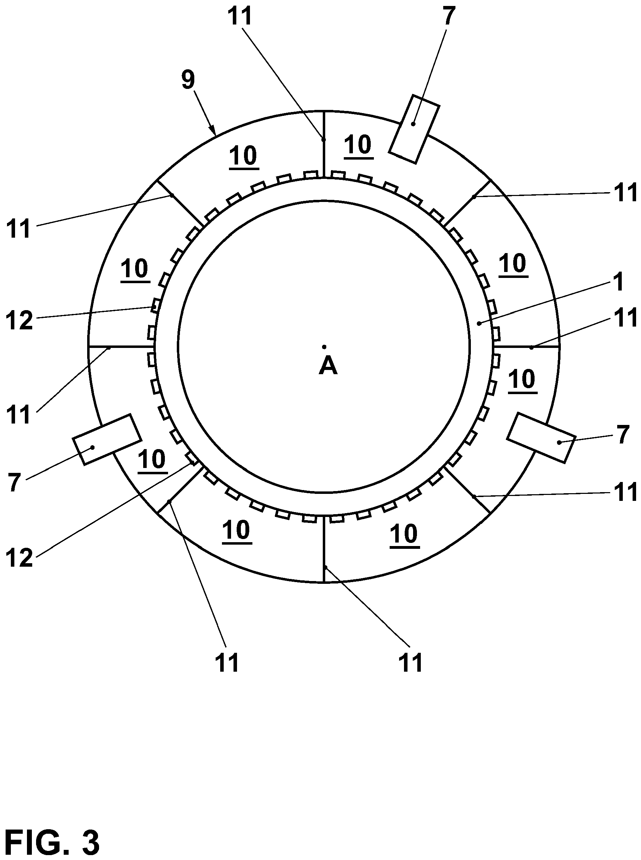

In Figur 3 ist eine axiale Ansicht auf die um die Brennkammerwand 1 anliegende ringförmige Dichtung 9 dargestellt. Diese besteht ihrerseits aus einer Vielzahl einzelner, so genannter Dichtungssegmente 10, die in Umfangsrichtung stirnseitig jeweils paarweise über Verbindungsstrukturen 11 aneinander gefügt sind.

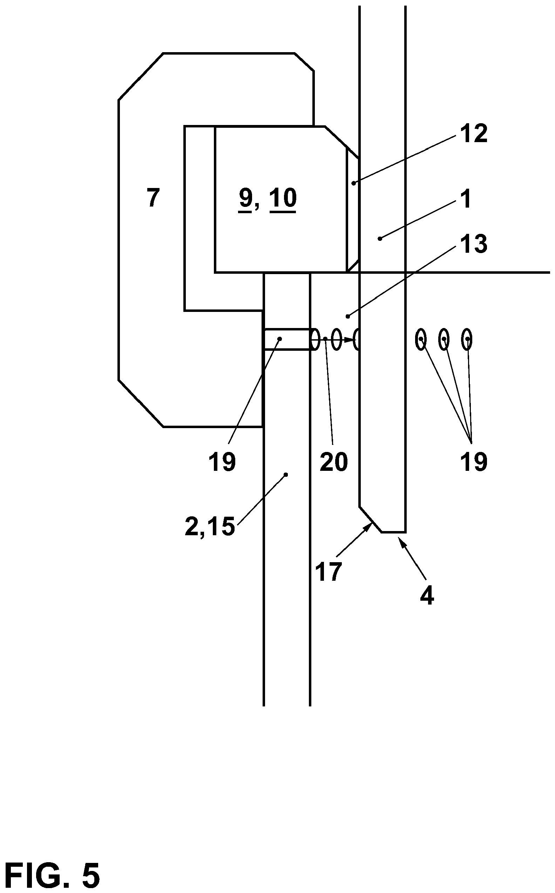

Die kragenförmigen Befestigungsmittel 7, wie sie schematisch aus den Figuren 2 und 5 hervorgehen, überspannen radial und axial die einzelnen Dichtungssegmente 10 und sorgen dafür, dass die einzelnen Dichtungssegmente 10 der ringförmigen Dichtung 9 gegenüber Brennerwand 1 und Heissgasgehäuse 2 einen in den verschiedenen Ebenen sich einstellenden Freiheitsgrad aufweisen.
Sämtliche Dichtungssegmente 10 innerhalb der ringförmigen Dichtung 9 schließen mit der Außenseite der Brennkammerwand 1 nicht bündig ab, sondern weisen an ihrer der Brennkammerwand zugewandten Oberfläche parallel zueinander verlaufende stegartige Überhöhungen auf und schließen somit mit der Brennkammerwand 1 eine Vielzahl von Strömungskanälen 12 ein, durch die Kühlluft K geleitet wird. Unter Bezugnahme auf Figur 2 ist ersichtlich, dass die durch die einzelnen Strömungskanäle 12 gerichtete Kühlluft K in den ringförmigen Raumbereich 13 gelangt, der radial durch die sich axial gegenseitig überlappende Brennkammerwand 1 und das Heissgasgehäuse 2 begrenzt ist. Durch das wandnahe Einströmen der Kühlluft K längs der Innenwand des Heissgasgehäuses 2 bildet sich an dieser eine Filmkühlung aus, durch die das Heissgasgehäuse gegenüber dem hohen Temperaturniveau der Heissgase effektiv gekühlt werden kann.

Aus Gründen einer erleichterten Montage bietet es sich an, die kragenförmig ausgebildeten Befestigungsmittel 7 nicht unmittelbar an dem zumeist einstückig ausgebildeten Heissgasgehäuse 2 zu befestigen, sondern an einer über eine Schweißnaht 14 mit dem Heissgasgehäuse 2 bündig axialwärts anschließenden Kranzwand 15, die im Weiteren jedoch als Teil des Heissgasgehäuses 2 betrachtet wird.

Der Betrieb einer derartigen Brenneranordnung zeigt jedoch verbesserungsbedürftige Auffälligkeiten, die mit dem Auftreten lokaler Überhitzungserscheinungen am Ort des Heissgasgehäuses 2 im Bereich stromab zur Brennkammerwandkante 4 verbunden sind. Derartige Überhitzungserscheinungen treten in Form sich in Strömungsrichtung lokal erstreckender, überhitzter schlierenartiger Wandbereiche auf, die in Umfangsrichtung längs der Innenwand des Heissgasgehäuses 2 periodisch wiederkehrende lokale Überhitzungsstellen verursachen.
Nähere Untersuchungen haben gezeigt, dass die lokalen überhitzten Innenwandbereiche des Heissgasgehäuses 2 durch Heissgasrezirkulationen verursacht oder zumindest mit verursacht werden, die im Bereich der Brennkammerwandkante 4 auftreten, wodurch Anteile des Heissgases über die Brennkammerwandkante 4 in den ringförmigen Raumbereich 13 gelangen und die vorstehend beschriebene Filmkühlung längs der Innenwand des Heissgasgehäuses 2 lokal zu stören vermögen. Die sich stromab längs der Innenwand des Heissgasgehäuses 2 schlierenartig replikativ ausbildenden Wandüberhitzungen können zu irreversiblen Wandschäden führen, insbesondere erleidet die Schweißnaht 14, längs der die Kranzwand 15 mit dem übrigen Heissgasgehäuse 2 verbunden ist, erhebliche Schädigungen.

### Darstellung der Erfindung

Hier will die Erfindung Abhilfe schaffen. Der Erfindung liegt die Aufgabe zugrunde, eine Brennkammeranordnung der vorstehend genannten Gattung derart weiterzubilden, dass Maßnahmen zu treffen sind, durch die die thermisch bedingten Schädigungen an der Heissgasgehäuse-Innenwand vermieden werden sollen. Insbesondere gilt es, nach Maßnahmen zu suchen, mit denen die periodisch wiederkehrenden lokalen Überhitzungsstellen effektiv unterdrückt werden können. Von besonderem Interesse ist es, die hierfür erforderlichen Modifikationen weitgehend ohne den Verbrennungsprozess sowie den Gesamtwirkungsgrad der Gasturbinenanlage reduzierende Verluste zu realisieren.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der weiteren Beschreibung unter Bezugnahme auf die Ausführungsbeispiele zu entnehmen.

Erfindungsgemäß wird eine Brennkammeranordnung gemäß den Merkmalen des Oberbegriffes des Anspruches 1 zu Zwecken einer effektiven Beseitigung der mit den periodisch wiederkehrenden lokalen Überhitzungsstellen im Zusammenhang stehenden Überhitzungen an der Innenwand des Heissgasgehäuses mit einer Brennkammerwandkante versehen, die derart profiliert ausgebildet ist, dass durch diese Profilierung bei einem Überströmen der Brennkammerwandkante von einem axial durch die Strömungskanäle in den ringförmigen Raumbereich gerichteten Kühlluftstrom eine Diffusorwirkung entsteht,wobei die Profilierung der Brennkammerwandkante mit einer Fase ausgebildet ist, mit einer dem Heissgasgehäuse zugewandten Fasenfläche, die mit der den Strömungskanal einschließenden Brennkammerwand einen Winkel α einschließt mit α = 40° ± 10°.

Durch die Profilierung der Brennkammerwandkante wird die Neigung der sich bis anhin ausbildenden Rezirkulation von Heissgasanteilen um die Brennkammerwandkante in Richtung des ringförmigen Raumbereiches wirksam unterdrückt, wodurch der örtlichen Überhitzungsproblematik im Rahmen der sich dort immer wieder bildenden Überhitzungsstellen wirkungsvoll entgegengetreten werden kann.

Es wird hinsichtlich des Fasenwinkels auf der einen Seite angestrebt, diesen möglichst klein zu halten, um die Diffusionswirkung entscheidend zu hemmen, auf der anderen Seite aber mit einem Fasenwinkel zu operieren, der eine gute Zusammenfügung von Brennkammerwand und Heissgasgehäuse ermöglicht.

Darüber hinaus konnte im Rahmen zahlreicher Versuche festgestellt werden, dass Leckageströmungen entstehen können, welche zusätzlich zu lokalen Überhitzungsstellen führen.

Derartige Leckageströmungen rühren von Kühlluftanteilen her, die in der Lage sind, die ringförmige Dichtung 9 durch Ritze oder Spalte im Bereich der jeweiligen Verbindungsstrukturen zu passieren, also jenen Bereichen, in denen zwei benachbarte Dichtungssegmente in Umfangsrichtung zur Außenseite der Brennkammerwand miteinander verbunden sind. Um diese Leckageströmungsanteile möglichst weitgehend zu vermeiden oder sie zumindest auf ein unbedeutendes Maß zu reduzieren, gilt es, die Fügekonturen im Bereich der Verbindungsstruktur derart exakt aufeinander abzustimmen und auszubilden, dass die im Bereich der Verbindungsstrukturen vorhandenen Spaltmaße auf ein Minimum reduziert werden. Dies betrifft zum einen sämtliche sich axial erstreckende Flächenbereiche, längs derer zwei benachbarte Dichtungssegmente 10 jeweils endseitig über ihre Verbindungsstruktur miteinander in Kontakt treten, zum anderen aber insbesondere die radial verlaufenden Fügebereiche, wie dies im Weiteren anhand eines konkreten Ausführungsbeispiels näher erläutert wird.

Eine weitere Möglichkeit zur Reduzierung der in den ringförmigen Raumbereich eindringenden Heissgasanteile auf Grund von Rezirkulationsströmungen sieht die Schaffung einer Vielzahl radial orientierter Durchtrittskanäle durch das Heissgasgehäuse im Bereich der vorstehend beschriebenen Kranzwand 15 bzw. am stromaufseitigen Ende des Heissgasgehäuses vor, die in Umfangsrichtung um das Heissgasgehäuse gleichmäßig verteilt angeordnet sind. Durch jeden der einzelnen Durchtrittskanäle wird von außen nach innen, radial oder quasi-radial strömende Kühlluft in den ringförmigen Raumbereich zwischen dem Heissgasgehäuse und der Brennkammerwand eingespeist. Eine derartige Kühllufteinspeisung hat jedoch auch Einfluss auf die sich ausbildende Filmkühlung längs der Innenwand des Heissgasgehäuses, so dass eine fein dosierte Einstellung der durch die einzelnen Durchtrittskanäle radial in den innen liegenden Raumbereich gerichtete Kühlluftströmung vorzunehmen ist, um einerseits die störende Rezirkulationsströmung zu vermeiden, andererseits die sich ausbildende Filmluftkühlung möglichst unbeeinflusst zu belassen.

Zur Beschreibung weiterer konstruktiver Maßnahmen zur effektiven Begegnung des sich ausbildenden Girlandeneffektes beim Betrieb einer in Rede stehenden Brennkammer sei auf die nachstehenden Ausführungsbeispiele unter Bezugnahme auf die Figuren verwiesen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Alle für das unmittelbare Verständnis der Erfindung nicht erforderlichen Elemente sind weggelassen worden. Gleiche Elemente sind in den verschiedenen Figuren mit den gleichen Bezugszeichen versehen. Die Strömungsrichtung der Medien ist mit Pfeilen angegeben. Es zeigen:
- Fig. 1: schematisierte Detaildarstellung einer profilierten Brennkammerwandkante,
- Fig. 2: schematisierter Teillängsschnitt durch eine an sich bekannte Brennkammeranordnung,
- Fig. 3: schematisierte Axialansicht auf eine an sich bekannte Gurtdichtung mit innen liegender Brennkammerwand,
- Fig. 4: schematisierte Axialansicht zwei in Verbindung zu bringender Dichtungssegmente an der Außenseite der Brennkammerwand sowie
- Fig. 5: schematisierte Darstellung des Fügebereiches zwischen Brennkammerwand und Heissgasgehäuse mit radial orientierten Durchtrittskanälen.

Die unter Bezugnahme auf das bereits zum Stand der Technik beschriebene Ausführungsbeispiel, das in den Fig. 2 und 3 dargestellt ist, eingeführten und erläuterten Bezugszeichen werden auch im Weiteren für gleiche oder gleichartige Komponenten verwendet.

In Fig. 1 ist das stromabwärtige Ende der Brennkammerwand 1 mit der endseitigen Brennkammerwandkante 4 dargestellt. Es sei angenommen, dass die Innenwand 16 der Brennkammerwand 1 der Heissgasströmung S zugewandt ist. Um die sich bei konventionellen Brennkammeranordnungen der vorstehenden Gattung ausbildenden Rezirkulationen R, die mit einem gekrümmten Pfeil versinnbildlich ist, im Bereich der Brennkammerwandkante 4 zu vermeiden, durch welche die Heissgasanteile in den zwischen dem Heissgasgehäuse 2 und der Brennkammerwand 1 jeweils begrenzten ringförmigen Raumbereich 13 gelangen, weist die Brennkammerwandkante 4 eine Fase mit einer Fasenfläche 17 auf, die der Innenwand des Heissgasgehäuses 2 zugewandt ist und mit der übrigen Brennkammerwand 1 einen spitzen Winkel α einschließt mit einem Winkel α von α = 40° ± 10°.

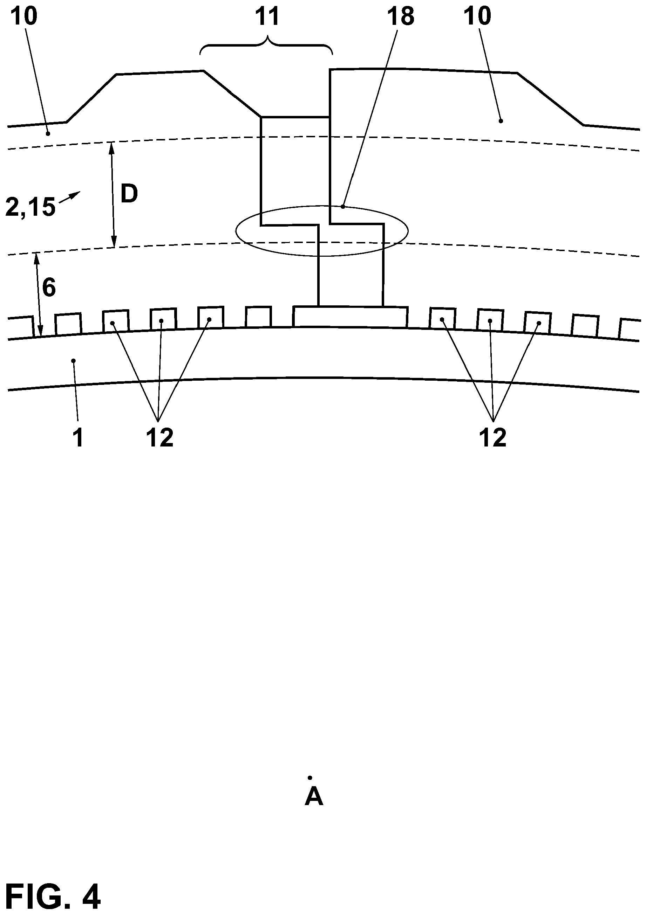

Nach dem derzeitigen Verständnis trägt die Fase im Bereich des stirnseitigen Abschlusses der Brennkammerwand 1 grundsätzlich zu einer Diffusorwirkung hinsichtlich des den ringförmigen Raumbereich 13 axial durchsetzenden Kühlluftstromes K bei, weil dies effektiv eine Rückströmung von Heissgasen S in den Raumbereich 13 begünstigt. Hierdurch entstehen Überhitzungserscheinungen längs der Innenwand des Heissgasgehäuses 2.
Eine weitere Maßnahme um Abhilfe gegenüber der Wandüberhitzungen des Heissgasgehäuses 2 zu schaffen, ist in Fig. 4 dargestellt, in der in axialer Blickrichtung zwei aneinander grenzende Dichtungssegmente 10 dargestellt sind, die über eine Verbindungsstruktur 11 miteinander in Eingriff gebracht werden können. Die Dichtungssegmente 10 weisen der Außenseite der Brennkammerwand 1 zugewandt eine rippenartig ausgestaltete Oberfläche auf, die mit der Brennkammerwand 1 axial orientierte Kühlkanäle 12 einschließt, durch die gezielt Kühlluft in den stromabseitigen ringförmigen Raumbereich 13 (siehe Fig. 2) geleitet werden kann. Von besonderem Interesse ist die Vermeidung von Kühlluftleckageströmungen, insbesondere durch Spalte und Ritze im Bereich der Verbindungsstruktur 11, die die sich im Weiteren ausbildende Filmluftkühlung in besonderem Maße zu beeinträchtigen vermögen. Zur Vermeidung derartiger Leckageströmungen weisen die einzelnen Dichtungssegmente 10 jeweils an ihren Endseiten sich gegenseitig durch Überlappung und Berührung charakterisierte Flächenabschnitte auf, die nach Zusammenfügen eine Art Labyrinthdichtung ergeben. Die zwischen beiden Dichtungssegmenten 10 vorhandene Labyrinthdichtung weist eine Stufenkontur 18 auf, wie aus Fig. 4 ersichtlich ist, mit einem in Umfangsrichtung orientierten Stufenabschnitt. Der Stufenabschnitt der Stufenkontur 18 weist eine radiale Lage auf, die in axialer Projektion von der Wandstärke D des sich stromab an das Dichtungssegment 10 anschließenden Heissgasgehäuses 2 im Zusammenhang mit der Kranzwand 15 überdeckt ist. Durch die vorstehend beschriebene Überlappung der Stufenkontur 18 mit der Wandstärke D des Heissgasgehäuses 2 kann zumindest weitgehend ausgeschlossen werden, dass Strömungsanteile von Kühlluft durch die Labyrinthdichtung hindurch in den stromabwärtsseitigen Raumbereich 13 gelangen können. In Figur 4 ist auch die radiale Erstreckung 6 des von Heissgasgehäuse 2 und Brennkammerwand 1 eingeschlossenen ringförmigen Raumbereichs 13 ersichtlich.

In Fig. 5 ist eine weitere Maßnahme zur Begegnung möglicher Rezirkulationsströmungen in den ringförmigen Raumbereich 13 angegeben. Fig. 5 zeigt eine teilperspektivische Ansicht des Verbindungsbereiches zwischen dem Heissgasgehäuse 2 und der Brennkammerwand 1, an deren Brennkammerwandkante 4 die lösungsgemäße Fase 17 angebracht ist. Unter Bezugnahme auf die in Fig. 4 beschriebene radiale Überlappung zwischen der Stufenkontur 18 mit der Wandstärke D (siehe Fig. 4) des Heissgasgehäuses 2, weist dieses gemäß Fig. 5 in vorteilhafter Weise eine am stromaufwärtigen Ende des Heissgasgehäuses 2 ausgebildete Wandstärkenverdickung auf.

Zusätzlich weist das Heissgasgehäuse 2 innerhalb des angegebenen Bereiches eine Vielzahl radial orientierter Durchgangskanäle 19 auf, die gleichmäßig längs des gesamten Umfanges des Heissgasgehäuses 2 angeordnet sind. Durch diese radial orientierten Durchtrittskanäle 19 gelangt zusätzliche Kühlluft K in den Bereich des ringförmigen Raumbereiches 13 zur weiteren Begegnung von sich bildenden Rezirkulationsströmungen, welche zu lokalen Überhitzungsstellen führen können.

### Bezugszeichenliste

- 1: Brennkammerwand
- 2: Heissgasgehäuse
- 3: Brennkammer
- 4: Vordere Brennkammerwandkante
- 5: Überlappung
- 6: Radiale Spaltweite
- 7: Kragenartiges Befestigungsmittel
- 8: Schweißverbindung
- 9: Ringförmige Dichtung
- 10: Dichtungssegment
- 11: Verbindungsstruktur
- 12: Strömungskanal
- 13: Ringförmiger Raumbereich
- 14: Schweißnaht
- 15: Kranzwand
- 16: Innenseite der Brennkammerwand
- 17: Fasenfläche
- 18: Stufenkontur
- 19: Radiale Durchtrittskanäle
- S: Heissgasströmung
- K: Kühlkanäle, Kühlluft
- R: Rezirkulationsströmung
- D: Wandstärke

## Patentansprüche

1. Brennkammeranordnung zum Betrieb einer Gasturbine mit einer den Brennkammerraum (3) umfassenden Brennkammerwand (1), die im Bereich des Brennkammeraustritts einen Strömungskanal für sich innerhalb der Brennkammer ausbildende Heißgase umschliesst, eine in axialer Strömungsrichtung der Heißgase frei endende Brennkammerwandkante (4) aufweist und stromab mit einer axialen Überlappung (5) sowie mit einem radialen Abstand (6) in ein, die Brennkammerwand (1) radial umgebendes Heissgasgehäuse (2) mündet, an dem mittel- oder unmittelbar das Heissgasgehäuse (2) stromauf überragende und in Umfangsrichtung des Heissgasgehäuses (2) verteilt angeordnete, einzelne kragenförmige Befestigungsmittel (7) angebracht sind, die zur axialen Arretierung einer aussenseitig an der Brennkammerwand (1) stromauf zur Brennkammerwandkante (4) angebrachten Dichtung (9) dienen, wobei die Brennkammerwand (1) in Umfangsrichtung vollständig mit einer ringförmigen Dichtung (9) umgeben ist, die aus einer Vielzahl einzelner Dichtungssegmente (10) besteht, die jeweils endseitig über Verbindungsstrukturen (11) aneinander gefügt sind, axial einseitig mittel- oder unmittelbar an das Heissgasgehäuse (2) angrenzen und mit der aussenseitigen Brennkammerwand (1) durch axial orientierte Strömungskanäle (12) begrenzt sind, die einseitig in einen ringförmigen Raumbereich (13) münden, der radial durch die sich axial gegenseitig überlappenden Brennkammerwand (1) und Heissgasgehäuse (2) begrenzt ist, **dadurch gekennzeichnet, dass** die Brennkammerwandkante (4) profiliert ausgebildet ist, dergestalt, dass durch diese Profilierung, bei einem Überströmen der Brennkammerwandkante (4) von einem axial durch die Strömungskanäle (12) geführten Kühlluftstrom (K) in den ringförmigen Raumbereich (13), eine Diffusorwirkung entsteht, wobei die Profilierung der Brennkammerwandkante (4) mit einer Fase ausgebildet ist, mit einer dem Heissgasgehäuse (2) zugewandten Fasenflläche (17), die mit der den Strömungskanal (S) einschließenden Brennkammerwand (1) einen Winkel α einschließt, mit α = 40° ± 10°.

2. Brennkammeranordnung nach Anspruch 1, **dadurch gekennzeichnet, dass** die kragenförmigen Befestigungsmittel (7) in Umfangsrichtung aussenseitig um eine stromauf mit dem Heissgasgehäuse (2) verbundene Kranzwand (15) eingebunden sind.

3. Brennkammeranordnung nach Anspruch 2, **dadurch gekennzeichnet, dass** die Kranzwand (15) mit dem Heissgasgehäuse (2) über eine in Umfangsrichtung des Heissgasgehäuses (2) verlaufende lösbare oder nicht lösbare Verbindung (14) verbunden ist.

4. Brennkammeranordnung nach einem der Ansprüche 1 bis 3, **dadurch gekennzeichnet, dass** die einzelnen Dichtungssegmente (10) eine in Umfangsrichtung der Brennkammerwand (1) orientierte Längserstreckung mit einer an die Brennkammerwand (1) angepassten Krümmung aufweisen, dass die jeweils in Längserstreckung endseitig vorgesehenen Verbindungsstrukturen (11) jedes einzelnen Dichtungssegmentes (10) derart ausgebildet sind, dass die Verbindungsstrukturen (11) jeweils zweier miteinander verbundener Dichtungssegmente (10) zumindest in Umfangsrichtung gegenseitig überlappende und berührende Flächenabschnitte in Form einer Labyrinthdichtung vorsehen.

5. Brennkammeranordnung nach Anspruch 4, **dadurch gekennzeichnet, dass** die zwischen zwei Dichtungssegmenten (10) vorhandene Labyrinthdichtung eine Stufenkontur (18) aufweist, mit einem in Umfangsrichtung orientierten Stufenabschnitt, und dass der in Umfangsrichtung orientierte Stufenabschnitt zwischen sämtlichen um die Brennkammerwand (1) angebrachten, jeweils paarweise miteinander verbundenen Dichtungssegmenten (10) in axialer Projektion von der Wandstärke (D) des Heissgasgehäuses (2) überdeckt ist.

6. Brennkammeranordnung nach einem der Ansprüche 2 bis 4, **dadurch gekennzeichnet, dass** die zwischen zwei Dichtungssegmenten (10) vorhandene Labyrinthdichtung eine Stufenkontur (18) aufweist, mit einem in Umfangsrichtung orientierten Stufenabschnitt, und dass der in Umfangsrichtung orientierte Stufenabschnitt zwischen sämtlichen um die Brennkammerwand (1) angebrachten, jeweils paarweise miteinander verbundenen Dichtungssegmenten (10) in axialer Projektion von der Wandstärke (D) der Kranzwand (15) überdeckt ist.

7. Brennkammeranordnung nach einem der Ansprüche 2 bis 6, **dadurch gekennzeichnet, dass** im Bereich der Kranzwand (15) eine Vielzahl radial orientierter Durchtrittskanäle (19) in Umfangsrichtung um die Kranzwand (15) verteilt derart ausgebildet und angeordnet ist, dass ein durch die Durchtrittskanäle (19) gerichteter Kühlluftstrom (K) in den ringförmigen Raumbereich (13) zwischen der Kranzwand (15) und der Brennkammerwand (1) eindringt.

8. Brennkammeranordnung nach Anspruch 1, **dadurch gekennzeichnet, dass** die Dichtungssegmente (10) jeweils paarweise über die Verbindungsstrukturen (11) aneinander gefügt sind.

## Claims

1. Combustion chamber arrangement for operating a gas turbine,
with a combustion chamber wall (1) surrounding the combustion chamber (3) and enclosing a flow channel in the region of the combustion chamber outlet for hot gases forming inside the combustion chamber;
a combustion chamber wall edge (4) which terminates freely in the axial flow direction of the hot gases and opens downstream with an axial overlap (5) and with a radial spacing (6) into a hot gas housing (2) radially surrounding the combustion chamber wall (1), on which housing, directly or indirectly, individual collar-like fixing means (7) are arranged which are distributed in the circumferential direction of the hot gas housing (2) and protrude upstream over the hot gas housing (2), and which serve for axial stoppage of a seal (9) arranged on the outside of the combustion chamber wall (1) upstream of the combustion chamber wall edge (4);
wherein in the circumferential direction, the combustion chamber wall (1) is completely surrounded by an annular seal (9) comprising a plurality of individual sealing segments (10), which are each joined to each other at the ends via connecting structures (11), and axially on one side directly or indirectly adjoin the hot gas housing (2) and, with the outside combustion chamber wall (1), are limited by axially oriented flow channels (12) which open on one side into an annular chamber region (13) which is limited radially by the axially mutually overlapping combustion chamber wall (1) and hot gas housing (2);
**characterised in that**
the combustion chamber wall edge (4) is configured profiled such that by this profiling, a diffuser effect arises when a cooling air stream (K) guided axially through the flow channels (12) overflows the combustion chamber wall edge (4) into the annular chamber region (13);
wherein the profiling of the combustion chamber wall edge (4) is formed with a chamfer, with a chamfer surface (17) facing the hot gas housing (2) and enclosing with the combustion chamber wall (1), including the flow channel (S), an angle α in which α = 40° ± 10º.

2. Combustion chamber arrangement according to claim 1, **characterised in that** in the circumferential direction, the collar-like fixing means (7) are integrated on the outside around an encircling wall (15) connected upstream to the hot gas housing (2).

3. Combustion chamber arrangement according to claim 2, **characterised in that** the encircling wall (15) is connected to the hot gas housing (2) via a releasable or ureleasable connection (14) running in the circumferential direction of the hot gas housing (2).

4. Combustion chamber arrangement according to any of claims 1 to 3, **characterised in that** the individual sealing segments (10) have a longitudinal extension oriented in the circumferential direction of the combustion chamber wall (1) with a curvature adapted to the combustion chamber wall (1), and
that the connecting structures (11) provided on the ends in the longitudinal extension of each individual sealing segment (10) are configured such that the connecting structures (11) of each two mutually connected sealing segments (10), at least in the circumferential direction, provide mutually overlapping and touching surface portions in the form of a labyrinth seal.

5. Combustion chamber arrangement according to claim 4, **characterised in that** the labyrinth seal present between two sealing segments (10) has a step contour (18) with a stepped portion oriented in the circumferential direction, and
that the stepped portion oriented in the circumferential direction, between all sealing segments (10) mutually connected in pairs and arranged around the combustion chamber wall (1), is covered in the axial projection by the wall thickness (D) of the hot gas housing (2).

6. Combustion chamber arrangement according to any of claims 2 to 4, **characterised in that** the labyrinth seal present between two sealing segments (10) has a step contour (18) with a stepped portion oriented in the circumferential direction, and
that the stepped portion oriented in the circumferential direction, between all sealing segments (10) mutually connected in pairs and arranged around the combustion chamber wall (1), is covered in the axial projection by the wall thickness (D) of the encircling wall (15).

7. Combustion chamber arrangement according to any of claims 2 to 6, **characterised in that** in the region of the encircling wall (15), a plurality of radially oriented passage channels (19) is formed which are distributed in the circumferential direction around the encircling wall (15) such that a cooling air flow (K) directed through the passage channels (19) penetrates into the annular chamber region (13) between the encircling wall (15) and the combustion chamber wall (1).

8. Combustion chamber arrangement according to claim 1, **characterised in that** the sealing segments (10) are joined together in pairs via the connecting structures (11).

## Revendications

1. Disposition de chambre de combustion pour l'exploitation d'une turbine à gaz avec une paroi de chambre de combustion (1) comprenant un espace de chambre de combustion (3), qui entoure, au niveau de la sortie de la chambre de combustion, un canal d'écoulement pour les gaz chauds se formant à l'intérieur de la chambre de combustion, qui comprend une arête de paroi de chambre de combustion (4) se terminant librement dans une direction d'écoulement axiale des gaz chauds et qui débouche, en aval, avec une superposition axiale (5) ainsi qu'avec une distance radiale (6), dans un boîtier pour gaz chauds (2) entourant radialement la paroi de la chambre de combustion (1), sur lequel sont disposés, indirectement ou directement, des moyens de fixation (7) en forme de collerettes, dépassant en amont du boîtier pour gaz chauds (2) et disposés de manière répartie sur la circonférence du boîtier à gaz chauds (2), qui servent à bloquer axialement un joint d'étanchéité (9) monté à l'extérieur sur la paroi de chambre de combustion (1) en amont de l'arête de la paroi de chambre de combustion (4), la paroi de chambre de combustion (1) étant entourée, sur sa circonférence, entièrement par un joint d'étanchéité annulaire (9) qui est constitué d'une pluralité de segments de joint d'étanchéité (10), qui sont assemblés entre eux chacun au niveau de leurs extrémités par l'intermédiaire de structures de liaison (11), qui sont adjacents axialement d'un côté, indirectement ou directement, au boîtier pour gaz chauds (2) et qui sont délimités avec la paroi de chambre de combustion (1) par des canaux d'écoulement (12) orientés axialement, qui débouchent d'un côté dans un espace annulaire (13), qui est délimité radialement par la paroi de chambre de combustion (1) et le boîtier pour gaz chauds (2), qui se chevauchent mutuellement axialement, **caractérisée en ce que** l'arête de paroi de chambre de combustion (4) est profilée de façon à ce que ce profilage permette d'obtenir, lors d'un débordement de l'arête de paroi de chambre de combustion (4) par un flux d'air de refroidissement (K) guidé axialement à travers les canaux d'écoulement (12) vers l'espace annulaire (13), un effet de diffusion, le profilage de l'arête de paroi de chambre de combustion (4) étant réalisé avec un chanfrein, avec une face de chanfrein (17) orientée vers le boîtier pour gaz chauds (2), qui forme avec la paroi de chambre de combustion (1) entourant le canal d'écoulement (S) un angle a, avec α = 40° ± 10°.

2. Disposition de chambre de combustion selon la revendication 1, **caractérisée en ce que** les moyens de fixation en forme de collerettes (7) sont intégrés sur la circonférence à l'extérieur autour d'une paroi de couronne (15) reliée en amont avec le boîtier pour gaz chauds (2).

3. Disposition de chambre de combustion selon la revendication 2, **caractérisée en ce que** la paroi de couronne (15) est reliée avec le boîtier pour gaz chauds (2) par l'intermédiaire d'une liaison (14) amovible ou non s'étendant dans la direction de la circonférence du boîtier pour gaz chauds (2).

4. Disposition de chambre de combustion selon l'une des revendications 1 à 3, **caractérisée en ce que** les différents segments de joint d'étanchéité (10) présentent une extension longitudinale orientée dans la direction de la circonférence de la paroi de chambre de combustion (1) avec une courbure adaptée à la paroi de chambre de combustion (1), **en ce que** les structures de liaison (11), prévues chacune à une extrémité dans l'extension longitudinale, de chaque segment de joint d'étanchéité (10) sont conçues de façon à ce que les structures de liaison (11) de deux segments de joint d'étanchéité (10) reliés entre eux présentent, au moins dans la direction de la circonférence, des portions planes se chevauchant mutuellement et se touchant, sous la forme d'un joint d'étanchéité à labyrinthe.

5. Disposition de chambre de combustion selon la revendication 4, **caractérisée en ce que** le joint d'étanchéité à labyrinthe se trouvant entre deux segments de joint d'étanchéité (10) présente un contour à étages (18), avec une portion à étages orientée dans la direction de la circonférence, ou **en ce que** la portion à étages orientée dans la direction de la circonférence est recouverte, entre l'ensemble des segments de joint d'étanchéité (10) disposés autour de la paroi de chambre de combustion (1), reliés entre eux par paires, en projection axiale, par l'épaisseur de paroi (D) du boîtier pour gaz chauds (2).

6. Disposition de chambre de combustion selon l'une des revendications 2 à 4, **caractérisée en ce que** le joint d'étanchéité à labyrinthe se trouvant entre deux segments de joint d'étanchéité (10) présente un contour à étages (18), avec une portion à étages orientée dans la direction de la circonférence et **en ce que** la portion à étages orientée dans la direction de la circonférence est recouverte, entre l'ensemble des segments de joint d'étanchéité (10) disposés autour de la paroi de chambre de combustion (1), reliés entre eux par paires, en projection axiale, par l'épaisseur de paroi (D) de la paroi de couronne (15).

7. Disposition de chambre de combustion selon l'une des revendications 2 à 6, **caractérisée en ce que**, au niveau de la paroi de couronne (15) est réalisée et disposée une pluralité de canaux de passage (19) orientés radialement, répartis dans la direction de la circonférence autour de la paroi de couronne (15) de façon à ce qu'un flux d'air de refroidissement (K) dirigé à travers les canaux de passage (19) pénètre dans l'espace annulaire (13) entre la paroi de couronne (15) et la paroi de chambre de combustion (1).

8. Disposition de chambre de combustion selon la revendication 1, **caractérisée en ce que** les segments de joints d'étanchéité (10) sont assemblés entre eux par paires par l'intermédiaire des structures de liaison (11).
